# EUROPÄISCHE PATENTANMELDUNG

(11) **EP 0 767 029 A1**
(43) Veröffentlichungstag der Anmeldung: **09.04.1997**
(21) Anmeldenummer: 96106466.4
(22) Anmeldetag: 24.04.1996
(51) Int. Cl.: B23K 35/365, B23K 35/30

(54) **Elektrode zum Schweissen von hochlegierten Stahlen**

(30) Priorität: 08.09.1995 RU 95114943
(71) Anmelder: NATUNICON TRADING LIMITED, Limassol (CY)
(72) Erfinder: Ioffe, Iossif Samuilowitsch, Dr., 129164 Moskau (RU); Gavrilin, Juri Michailowitsch, 129337 Moskau (RU)
(74) Vertreter: Pellmann, Hans-Bernd, Dipl.-Ing.

(57) **Zusammenfassung**

Beschrieben wird eine Elektrode zum Schweißen von hochlegierten Stahlsorten. Die Elektrode besteht aus einem Stab, der aus kohlenstoffarmen manganhaltigen oder niedriglegierten Draht und einer Umhüllung ausgeführt wird.

Die Umhüllung enthält in Massen-%:
- Rutil-Konzentrat : 15-20
- Marmor : 7-12
- Silikat : 8-13
- Ferrotitan : 6-12 und
- Chrom und Nickel in einer Menge, die die Gesamtmenge von Cr 9,5-27 und Ni 0,6-19 in der Elektrode sicherstellt.

Außerdem enthält die Umhüllung Ferromangan und Ferrosilizium in einer Menge, die die Gesamtmenge von Mn 1,5-2,0 Massen-%, Si 0,6-15 Massen-% sicherstellt sowie mindestens eine legierende Komponente, die aus der Gruppe Mo, Nb, V, W ausgewählt ist.

## Beschreibung

Die Erfindung betrifft das Schweißen, insbesondere die umhüllten Elektroden für das manuelle Lichtbogenschweißen von hochlegierten Stählen in verschiedenen Wirtschaftszweigen.

Zum Schweißen von hochlegierten Stahlsorten wurde eine große Anzahl verschiedener Elektrodenmarken entwickelt und verwendet. Die meisten Elektrodenmarken werden nach einem Prinzip hergestellt: Der Elektrodenstab wird aus dem Metall ausgeführt, dessen chemische Zusammensetzung am nächsten der des mit der Elektrode zu verschweißenden Metalls steht. Die Umhüllung dient dabei dem sicheren Schutz der Schweißzone gegen die Wechselwirkungen mit der Atmosphäre. Die übrigen erforderlichen Funktionen der Umhüllung bleiben erhalten (siehe, z.B., den SU-Urheberschein Nr. 930832, 1990). Das prädestiniert die hohen Kosten dieser Elektroden, weil die Herstellung der hochlegierten Stahlsorten für die Schweißelektroden erhebliche Aufwendungen an Energie und Rohstoffen erfordert.

Die Zusammensetzungen der Elektrodenumhüllungen sind bekannt (SU-Urheberschein Nr. 233812, 1968) die für die Herstellung des Elektrodentyps EA-I (russische Bezeichnung) zum Schweißen von hochlegiertem Stahl, Typ 18-8, verwendet werden, in dem die Bildung des austenitisch-ferritischen Gefüges über das Auflegieren mit dem einphasigen Nichrom-Pulver durch die Umhüllung in einer Menge dadurch sichergestellt wird, daß der Chromgehalt im Schweißgut im Bereich von 17-21 % und Nickelgehalt von 8-11 % liegt.

Die Mängel dieser Elektroden sind: schlechtere Bildung der Schweißnaht beim Schweißen der T- und äußeren Kehlnähte und ein erschwertes Entschlacken, besonders beim Schweißen der Mehrlagennähte. Der Nachtteil dieser Elektrode besteht außerdem in einer starken Abhängigkeit der Cr- und Ni-Menge in der Naht von der Menge dieser Elemente im Nichrom, was es praktisch unmöglich macht, die Zusammensetzung der Umhüllung bei Änderungen der Verhältnisse von Cr- und Ni-Mengen im Schweißgut für verschiedene Elktrodenmarken zu korrigieren.

Die Aufgabe der vorliegenden Erfindung ist die Bereitstellung von Elektroden für das Schweißen von hochlegierten Stahlsorten der Cr- und Ni-Klasse mit verschiedenen Cr- und Ni-Mengen.

Diese Elektroden sollen neben den vorhandenen erforderlichen physikalisch-mechanischen Parametern die schweiß-technologischen Eigenschaften des Schweißguts wesentlich verbessern.

Dabei sollen auch die Selbstkosten der Elektroden wesentlich gesenkt werden. Es wird möglich, mit Wechselstrom zu verschweißen.

Diese Aufgabe wird durch die Kombination der im Anspruch 1 definierten Merkmale gelöst. Vorteilhafte Weiterbildungen der Erfindung sind in den Unteransprüchen definiert.

Wesentlich für die Erfindung ist die Verwendung von kohlenstoffarmen und niedriglegierten Stahlsorten als Trägerelement. Die Einführung von Cr, Ni, Mn, W, Nb, V, Mo, Si in die Umhüllung kann jedoch in Form von Pulvern und Ferrolegierungen erfolgen. Die Mengen der legierenden Elemente in den Elektroden betragen:
Chrom 9,5-27 %, , Nickel 0,6-19 %, Molybdän 0,3-3 %, Vanadin 0,3-2,5 %, Wolfram 1,3-1,8 %, Niob 0,6-1,3 %, Mangan bis zu 2 %, Silizium bis zu 1,5 %, abhängig von den Anforderungen an den Elektrodentyp für das Lichtbogenschweißen von hochlegierten Stahlsorten mit besonderen Eigenschaften (GOST 10052-89).

Chrom, Nickel und die anderen legierenden Elemente schaffen es, infolge hoher Diffusionsgeschwindigkeit, beim Gelangen in das Schweißbad, sich im flüssigen Bad zu lösen und im gesamten Badraum gleichmäßig zu verteilen. Das wird vom Schlackensystem verursacht. Dies bewirkt einen feintropfigen Stab-Werkstoffübergang. Während dieses Übergangs läßt die große spezifische Oberfläche der Metalltropfen die Diffusionsprozesse der Elemente aus der Umhüllung in das Tropfenmetall intensiv verlaufen. Die negativen Einflüße der Umhüllung auf den Übergang der Elemente in die Naht, infolge eines hohen Oxydationspotentials, werden durch die Einführung einer signifikanten Menge von Ferrotitan verringert, welches neben der Verringerung der Oxydationseigenschaften der Schlacken auch die Verbesserung der Korrosionssicherheit des austenitisch-ferritischen Gefüges im Schweißgut bewirkt.

Die Zusammensetzung der Umhüllung enthält deswegen die Komponenten in folgendem Verhältnis: Rutil 15-20 %, Marmor 7-12 %, Silikate 8-13 % , Ferrotitan 6-12 % , das Übrige ist ein Pulvergemisch, das Cr und Ni in erforderlichen Mengen und in erforderlichem Verhältnis sowie legierende Zusätze wie W, Mo, Nb, V in der Menge enthält, die für die entsprechende Marke erforderlich ist. Die Si- und Mn-Mengen in der Umhüllung werden dabei abhängig von der Drahtmarke reguliert, die für die Elektrodenherstellung verwendet wird. Die Si- und Mn-Mengen in der Elektrode betragen entsprechend 0,6-1,5 % und 1,5-2,0 %. Der Koeffizient der Umhüllungsmasse beträgt 90-110 %. Als Silikate werden Muskovit, und/oder Talk, und/oder Phlogopit verwendet.

Gemäß einer Ausführungsform der Erfindung enthält eine Elektrode zum Schweißen von hochlegierten Stählen eine Umhüllung bestehend aus: Titandioxid, Marmor, Mangan, Silizium, Titan, Chrom, Nickel und zumindest einer legierenden Komponente, ausgewählt aus der Gruppe: Molybdän, Niob, Vanadin, Wolfram. Die Elektrode zeichnet sich dadurch, daß der als Trägerelement dienende Stab aus einem kohlenstoffarmen manganhaltigen oder niedriglegiertem Draht hergestellt ist. Die Umhüllung enthält zusätzlich Silikat. Titandioxid wird in die Umhüllungsmasse in Form von Rutilkonzentrat eingeführt, während Titan, Mangan und Silizium als Ferrolegierungen vorhanden sind.

Dabei sind folgende Komponentenanteile in der Umhüllungsmasse vorhanden:

| | |
|---|---|
| Rutilkonzentrat | 15-20 Massen-% |
| Marmor | 7-12 Massen-% |
| Silikat | 8-13 Massen-% |
| Ferrotitan | 6-12 Massen-% |

Außerdem enthält die Umhüllungsmasse Chrom und Nickel in einer Menge, die in Massen-% folgende Gesamtmenge in der Elektrode ergibt: Chrom 9,5-27, Nickel 0,6-19. Ferromangan und Ferrosilizium sind in einer Menge enthalten, die in Massen-% aus einer Gesamtmenge folgender Komponenten resultiert: Mangan 1,5-2,0; Silizium 0,6-1,5, und zumindest eine legierende Komponente, die aus der Gruppe ausgewählt wird: Molybdän, Niob, Vanadin, Wolfram - der Rest. Der Koeffizient der Umhüllungsmasse, d. h. die Menge der Beschichtungsmasse im beschichteten Elektrodenabschnitt beträgt 90-110 Massen-% bezogen auf die Masse des Trägerelements.

Im Labor wurde eine Charge von Elektroden ⌀ 4 mm in der Hülse ⌀ 6,8 mm aus dem Draht Sw 081G2S (russische Bezeichnung) mit einer Gesamtmenge von Mn 1,7 % und Silizium 0,8 % hergestellt. Der Koeffizient der Umhüllunsmasse betrug 94 %. Die Chrom-Gesamtmenge betrug 22 %; die Nickel-Gesamtmenge betrug 12 %; die Mangan-Gesamtmenge betrug 2 %; die Silizium-Gesamtmenge betrug 1 %, Ferrotitan 8 %, Muskovit 8 %, Marmor 7 %, Rutil 17 %, Mo 1 %.

Die Prüfungen der schweiß-technologischen Eigenschaften der hergestellten Elektroden ergaben, daß die Beständigkeit des Brennens des Lichtbogens, Bildung der Naht und der Schlacke, Abtrennbarkeit der Schlacke die analogen Parameter der herkömmlichen Elektroden für das Schweißen von Stahlsorten, Typ 18-8, wesentlich übertreffen.

Für die Erfassung der statistischen Daten wurden 5 Chargen von Elektroden hergestellt. Die Zusammensetzung der Chargen von Elektroden, die Kennwerte der schweiß-technologischen Eigenschaften, chemische Zusammensetzung des Schweißguts, die Charakteristika des Metalls der Naht sind in der Tabelle aufgeführt.

Zur Bestimmung der Korrosionsbeständigkeit des Schweißguts gemäß GOST 6032-89 wurden Muster aus der Stumpfverbindung geschnitten und zur Prüfung ins Zentrale Forschungsinstitut für Schwarzmetallurgie, Labor für korrosionsbeständige Stähle und Legierungen, gebracht. Laut Gutachten dieser Institution hat das Schweißgut gute Verformungsfähigkeit, und ohne provozierende Wärmebehandlung ist es zur interkristallinen Korrosion nicht geneigt, wie die Prüfung, Methodik AM (GOST 6032-89), ergeben hat.

Die hergestellten Elektroden wurden auf schweiß-technologischen Eigenschaften und mechanische Kennwerte des Schweißguts geprüft. Die mechanischen Eigenschaften entsprechen voll den Anforderungen GOST 10052-89 für den Typ EA-I (russische Bezeichnung).

Die schweiß-technologischen Eigenschaften der Elektroden wurden sowohl beim Schweißen mit Gleichstrom bei Pluspolung, wie alle Elektroden dieses Typs, als auch mit Wechselstrom, geprüft, was beim Schweißen mit herkömmlichen Elektroden beim Typ EA-I nicht möglich ist.

Die Prüfungen der Versuchs-Chargen ergaben, daß die Verwendung von kohlenstoffarmen manganhaltigen Drähte oder niedriglegierten Drähte als Stäbe in Verbindung mit der Umhüllung, die legierende Zusätze enthält und mit einem Schlackensystem, welches das Rutilkonzentrat enthält, gute Ergebnisse bringt, und zwar: Die Elektroden entsprechen in allen Kennwerten den Anforderungen, die an die Elektroden dieses Typs gestellt werden, und noch mehr, sie übertreffen diese Anforderungen in schweiß-technologischen Eigenschaften. Hinzu kommt noch die Möglichkeit, sie mit Wechselstrom zu schweißen, dabei werden die Selbskosten erheblich gesenkt.

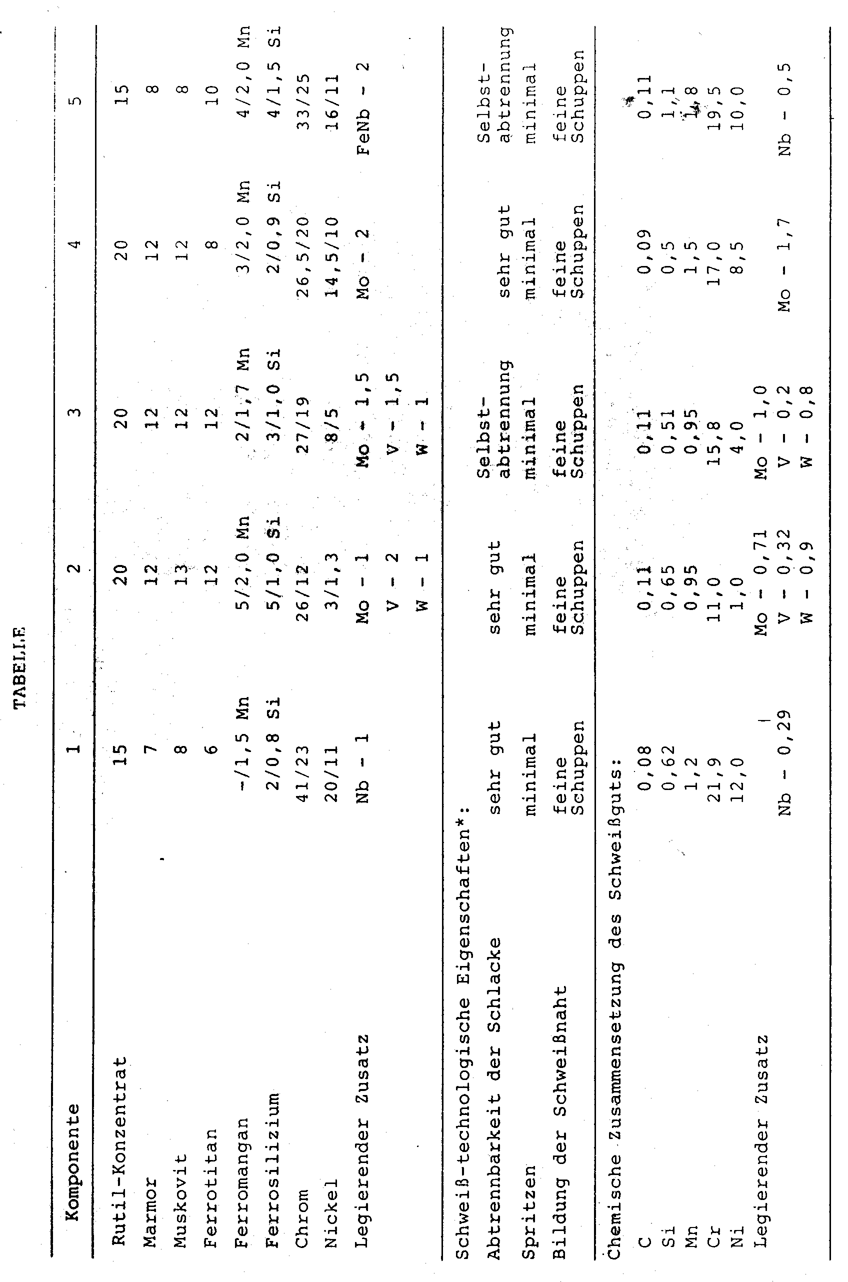

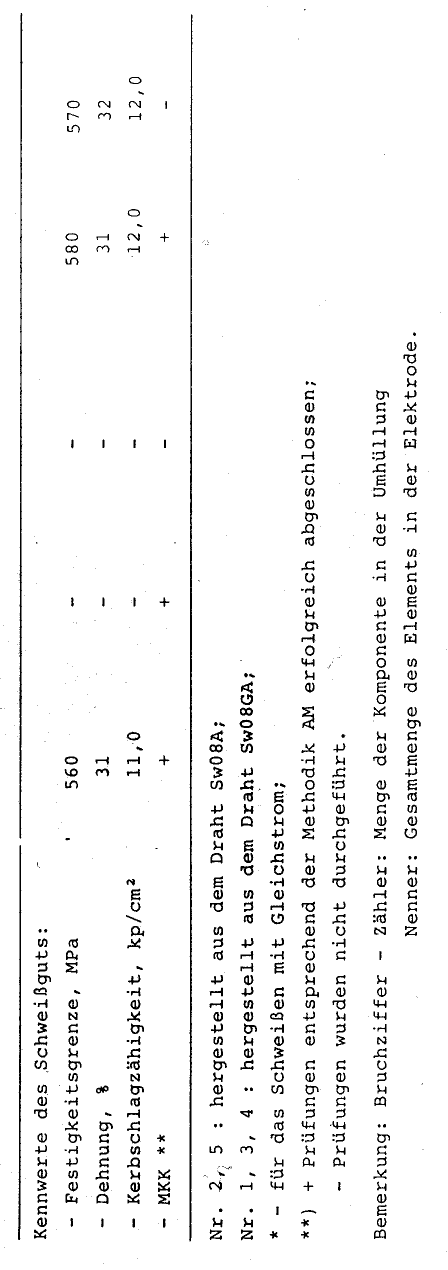

Beschrieben wird eine Elektrode zum Schweißen von hochlegierten Stahlsorten. Die Elektrode besteht aus einem Stab, der aus kohlenstoffarmen manganhaltigen oder niedriglegierten Draht und einer Umhüllung ausgeführt wird.

Die Umhüllung enthält in Massen-%:
- Rutil-Konzentrat : 15-20
- Marmor : 7-12
- Silikat : 8-13
- Ferrotitan : 6-12 und
- Chrom und Nickel in einer Menge, die die Gesamtmenge von Cr 9,5-27 und Ni 0,6-19 in der Elektrode sicherstellt.

Außerdem enthält die Umhüllung Ferromangan und Ferrosilizium in einer Menge, die die Gesamtmenge von Mn 1,5-2,0 Massen-%, Si 0,6-15 Massen-% sicherstellt sowie mindestens eine legierende Komponente, die aus der Gruppe Mo, Nb, V, W ausgewählt ist.

## Patentansprüche

1. Elektrode zum Schweißen von hochlegierten Stählen mit 1,5-2,0 Massen-% Mangan und 0,6-1,5 Massen-% Silizium, bestehend aus
- einem Trägerelement aus kohlenstoffarmem, niedriglegiertem Stahl und
- einer Beschichtung aus
| | |
|---|---|
| Rutil | 15-20 Massen-% |
| Marmor | 7-12 Massen-% |
| Silikat | 8-13 Massen-% |
| Ferrotitan | 6-12 Massen-% |
und Pulvern oder Ferrolegierungen als Rest, die Chrom und Nickel, enthalten.

2. Elektrode nach Anspruch 1, dadurch gekennzeichnet, daß die Beschichtung eine Legierungskomponente, die aus der Gruppe Molybdän, Niob, Vanadin und Wolfram ausgewählt ist, enthält.

3. Elektrode gemäß Anspruch 2, dadurch gekennzeichnet, daß die aus der Gruppe ausgewählten Komponenten in die Beschichtung in folgender Menge eingeführt werden, in Massen-%:
| | |
|---|---|
| Molybdän | 0,3-3,3 |
| Wolfram | 1,3-1,8 |
| Vanadin | 0,3-2,5 |
| Niob | 0,6-1,3 |

4. Elektrode gemäß Anspruch 2, dadurch gekennzeichnet, daß die aus der Gruppe: Molybdän, Wolfram, Vanadin, Niob ausgewählten Elemente in die Beschichtung als Ferrolegierungen eingeführt werden.

5. Elektrode nach einem der Ansprüche 1 bis 4, dadurch gekennzeichnet, daß die Beschichtung anstelle des Silikats Muskovit und/oder Talk, und/oder Phlogopit, und/oder Kaolin enthält.

6. Elektrode nach einem der Ansprüche 1 bis 5, dadurch gekennzeichnet, daß die Beschichtung zusätzlich Fluoritkonzentrat bis zu 20 Massen-% enthält.

7. Elektrode nach einem der Ansprüche 1 bis 6, dadurch gekennzeichnet, daß der Anteil der Beschichtung 90-110% des beschichteten Elektrodenabschnitts beträgt.
